# EUROPÄISCHE PATENTANMELDUNG

(11) **EP 3 805 593 A1**
(43) Veröffentlichungstag der Anmeldung: **14.04.2021**
(21) Anmeldenummer: 20191962.8
(22) Anmeldetag: 20.08.2020
(51) Int. Cl.: F16F 1/04, F16F 1/12, E04G 7/28

(54) **GERÜSTFEDER UND GERÜSTANORDNUNG HIERMIT**

(30) Priorität: 10.10.2019 DE 102019127350
(71) Anmelder: Brand KG, 59609 Anröchte (DE)
(72) Erfinder: Pink, Dieter, 59609 Anröchte (DE); Ramchen, Waldemar, 59609 Anröchte (DE)
(74) Vertreter: Wickord, Wiro

(57) **Zusammenfassung**

Die Erfindung betrifft eine aus einem Metalldraht geformte Gerüstfeder (1) umfassend einen Federkörper (2), wobei der Federkörper (2) eine Mehrzahl von Windungen (3) aufweist, umfassend ein dem Federkörper (2) an einer ersten Stirnseite zugeordnetes Ösenende (4), wobei der Metalldraht dort einen in eine Längsrichtung erstreckten Stegabschnitt (6) und einen sich an den Stegabschnitt (6) anschließenden Hakenabschnitt (7) formt, und umfassend ein Klammerende (5), wobei das Klammerende (5) sich an einer dem Ösenende (4) gegenüberliegenden zweiten Stirnseite des Federkörpers (2) an ebendiesen anschließt und wobei der Metalldraht dort wenigstens eine erste Kröpfung (8) aufweist zur Formung einer Klammer. Ferner betrifft die Erfindung eine Gerüstanordnung mit einer erfindungsgemäßen Gerüstfeder (1).

## Beschreibung

Die Erfindung betrifft eine Gerüstfeder aus einem gebogenen Metalldraht. Ferner umfasst die Erfindung eine Gerüstanordnung mit einer erfindungsgemäßen Gerüstfeder.

Im Gerüstbau ist es üblich, Belagbohlen zur Sicherung ihrer relativen Lage und zur Verbesserung der Stabilität der Gerüstanordnung miteinander zu verbinden. Durch die Verbindung sind die Belagbohlen gegen eine unbeabsichtigte Verschiebung und/oder ein Herabfallen gesichert. Insbesondere ist bekannt, Belagbohlen miteinander zu verschrauben. Die Belagbohlen werden hierzu so übereinander gelegt, dass in den Belagbohlen vorgesehene Durchgangsausnehmungen fluchtend zueinander angeordnet sind. Die Belagbohlen können dann miteinander verbunden werden, indem eine Schraube durch die Durchgangsausnehmungen geführt wird.

Üblicherweise müssen zur Verschraubung der Belagbohlen eine Schraube, eine Mutter und wenigstens eine Unterlegscheibe montiert werden. Hierbei ist der Montageaufwand erheblich, da insbesondere das Einsetzen der Schraube und das Aufschrauben der Mutter von zwei unterschiedlichen Seiten und beispielsweise durch zwei Gerüstbauer zu erfolgen hat. Darüber hinaus besteht die Gefahr, dass bei der Montage der Schraubverbindungen Einzelteile herabfallen und darunter befindliche Gegenstände beziehungsweise Personen beschädigen oder verletzen.

Aufgabe der Erfindung ist es, die Verbindung von Belagbohlen einer Gerüstanordnung zu vereinfachen.

Zur Lösung der Aufgabe ist die Erfindung die Merkmale der Patentansprüche 1, 9 und 10 auf.

Demzufolge ist eine aus einem Metalldraht geformte Gerüstfeder vorgesehen, welche einen Federkörper sowie auf gegenüberliegenden Stirnseiten des Federkörpers ein Ösenende und ein Klammerende vorsieht. Der Federkörper weist eine Mehrzahl von Windungen auf, welche aus dem Metalldraht geformt sind. Bevorzugt sind vier bis sieben Windungen und besonders bevorzugt fünf Windungen realisiert, wobei die Windungen in einer entspannten Ausgangslage der Gerüstfeder mantelseitig aneinander anliegen können. Insbesondere weist der Federkörper eine zylindrische Außengeometrie und einen konstanten Nenndurchmesser auf. Das Ösenende, welches an einer ersten Stirnseite des Federkörpers vorgesehen ist, sieht einen durch den Metalldraht geformten, in eine Längsrichtung erstreckten Stegabschnitt sowie einen sich an den Stegabschnitt anschließenden Hakenabschnitt vor. Das Klammerende schließt sich an einer der ersten Stirnseite gegenüberliegenden zweiten Stirnseite des Federkörpers an ebendiesen an. Der Metalldraht weist dort wenigstens eine erste Kröpfung auf zur Formung einer Klammer.

Der besondere Vorteil der Erfindung besteht darin, dass die Verbindung einander zugeordneter Belagbohlen signifikant vereinfacht wird und zugleich sicher erfolgen kann. Es reduziert sich zum einen der Montage- und Demontageaufwand, da nur ein Verbindungsbauteil vorzusehen ist, welches von oben montiert werden kann. Zum anderen sinkt das Risiko, welches von herabfallenden Teilen der heute üblicherweise verwendeten Schraubverbindung ausgeht. Zudem ergibt sich ein erheblich reduzierter logistischer Aufwand. Es müssen nicht unterschiedliche Komponenten der Schraubverbindung vom Monteur bereitgehalten werden. Die Elastizität der Gerüstfeder sorgt darüber hinaus dafür, dass gewisse Lagetoleranzen besonders einfach ausgeglichen werden können.

Aus den weiteren Unteransprüchen und der nachfolgenden Beschreibung sind weitere Vorteile, Merkmale und Einzelheiten der Erfindung zu entnehmen. Dort erwähnte Merkmale können jeweils einzeln für sich oder auch in beliebiger Kombination erfindungswesentlich sein. Erfindungsgemäß beschriebene Merkmale und Details der Gerüstfeder gelten selbstverständlich auch im Zusammenhang mit der erfindungsgemäßen Gerüstanordnung und umgekehrt. So kann auf die Offenbarung zu den einzelnen Erfindungsaspekten stets wechselseitig Bezug genommen werden. Die Zeichnungen dienen lediglich beispielhaft der Klarstellung der Erfindung und haben keinen einschränkenden Charakter.

Es zeigen:
- Fig. 1: eine perspektivische Ansicht einer erfindungsgemäßen Gerüstfeder,
- Fig. 2: eine stirnseitige Ansicht der Gerüstfeder nach Fig. 1,
- Fig. 3: eine Seitenansicht der Gerüstfeder nach den Fig. 1 und 2,
- Fig. 4: eine perspektivische Ansicht einer Gerüstanordnung mit der erfindungsgemäßen Gerüstfeder nach den Fig. 1 bis 3,
- Fig. 5: eine stirnseitige Ansicht der Gerüstanordnung nach Fig. 4,
- Fig. 6: eine Seitenansicht der Gerüstanordnung nach den Fig. 4 und 5 und
- Fig. 7: einen Schnitt A-A durch die Gerüstanordnung nach den Fig. 4 bis 6.

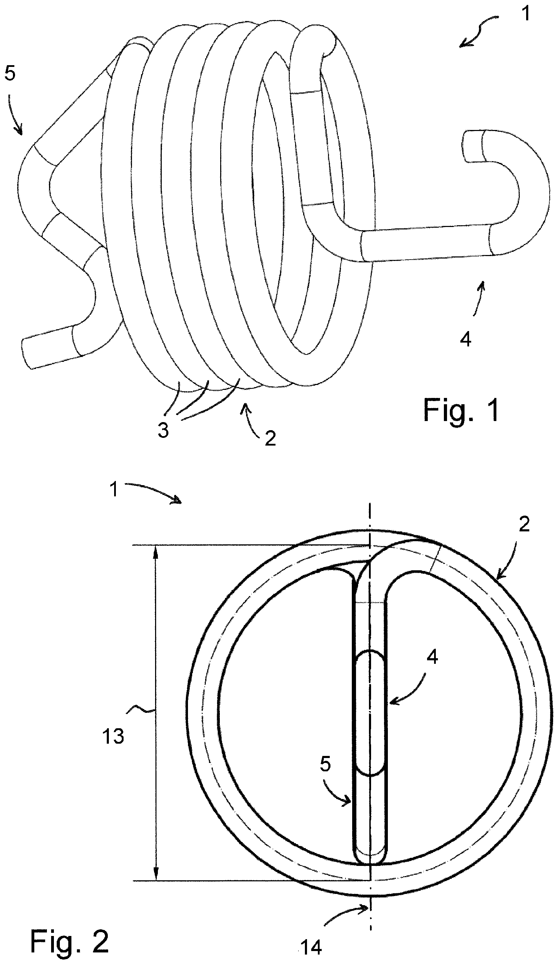

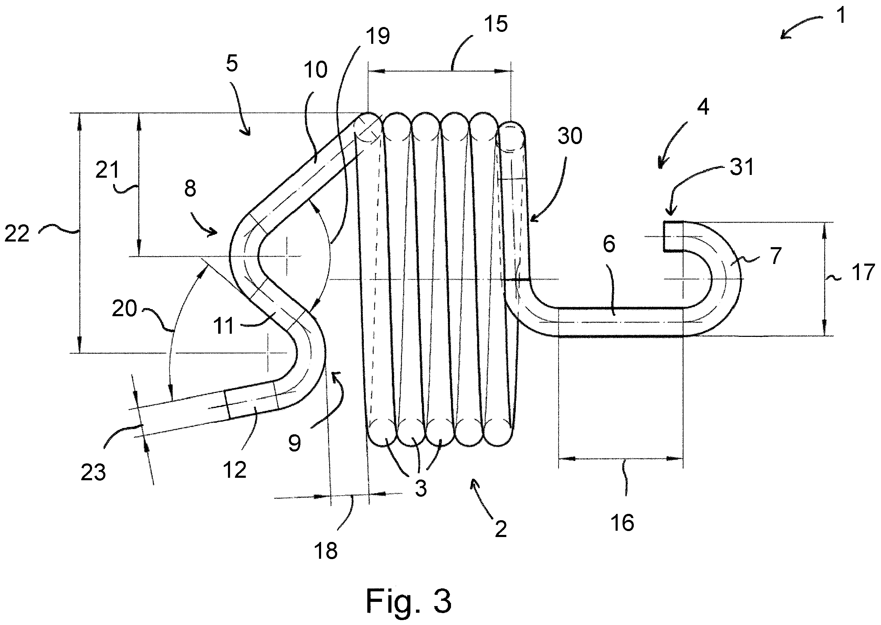

Eine in den Fig. 1 bis 3 dargestellte erfindungsgemäße Gerüstfeder 1 umfasst als geometriebestimmende Komponenten einen Federkörper 2, ein Ösenende 4 sowie ein Klammerende 5. Ein einziger Metalldraht der Gerüstfeder 1 formt dabei den Federkörper 2, das Ösenende 4 sowie das Klammerende 5.

Der Federkörper 2 der Gerüstfeder 1 sieht eine Mehrzahl von Windungen 3 vor. Die Windungen 3, welche durch den Metalldraht geformt werden, sind in der dargestellten, nicht zugbelasteten Ausgangslage der Gerüstfeder 1 mantelseitig aneinander angelegt. Ein Nenndurchmesser 13 der Gerüstfeder 1 entspricht etwa einem Acht- bis Neunfachen des Drahtdurchmessers 23.

Vorliegend sieht die Gerüstfeder 1 fünf Windungen 3 vor. Es hat sich hierbei gezeigt, dass durch das Vorsehen von fünf Windungen 3 eine gleichermaßen gute Montagefähigkeit der Gerüstfeder 1 und eine sichere Verbindung einander zugeordneter Belagbohlen 24, 25 erreicht werden kann. Applikationsspezifisch kann die Anzahl der Windungen 3 jedoch frei gewählt werden. Abhängig von der jeweiligen Applikation und insbesondere der Geometrie der miteinander zu verbindenden Belagbohlen 24, 25 sind zufrieden stellende Ergebnisse auch mit drei bis zehn und insbesondere mit vier bis sieben Windungen 3 erreicht worden.

Ein Nennmaß 15 einer Länge des Federkörpers 2 liegt bei der dargestellten Ausführungsform der erfindungsgemäßen Gerüstfeder 1 im Bereich des 0,3 bis 0,5-fachen Nenndurchmessers 13 des Federkörpers 2. Das Nennmaß 15 ist dabei durch die Anzahl der Windungen 3 des Federkörpers 2 und den Drahtdurchmesser 23 bestimmt.

Der Metalldraht formt auf einander gegenüberliegenden Stirnseiten des Federkörpers 2 das Ösenende 4 sowie das Klammerende 5 der Gerüstfeder 1. Zur Formung des Ösenendes 4 sind ein im Wesentlichen quer zu einer Längsrichtung der Gerüstfeder 1 orientierter Anschlussabschnitt 30, ein hierzu im Wesentlichen senkrecht orientierter, in die Längsrichtung erstreckter Stegabschnitt 6 sowie ein an den Stegabschnitt 6 anschließender Hakenabschnitt 7 vorgesehen. Der Hakenabschnitt 7 weist eine Kragweite 17 auf, welche etwa dem drei- bis fünffachen Drahtdurchmesser 23 entspricht. Der Hakenabschnitt 7 ist vorliegend im Wesentlichen kreisbogenförmig gestaltet. An den Hakenabschnitt 7 schließt sich ein zur Anlage an eine Aufstandsfläche 27 einer oberen Belagbohle 24 gebildeter Stützabschnitt 31 an. Eine in die Längsrichtung bestimmte Länge des Stützabschnitts 31 ist dabei so bestimmt, dass bei der Montage beziehungsweise Demontage der Gerüstfeder 1 mit einem hakenförmigen Montagewerkzeug der Hakenabschnitt 7 des Ösenendes 4 hintergriffen werden kann.

Das Klammerende 5 der Gerüstfeder 1 sieht zwei Kröpfungen 8, 9 vor. Eine erste Kröpfung 8 schließt sich an einen Anschlussabschnitt 10 an, welcher die erste Kröpfung 8 und den Federkörper 2 verbindet. Eine zweite Kröpfung 9 ist über einen Verbindungsabschnitt 11 des Klammerendes 5 mit der ersten Kröpfung 8 verbunden. An die zweite Kröpfung 9 schließt sich ein freier Endabschnitt 12 des Klammerendes 5 an.

Die erste Kröpfung 8, die zweite Kröpfung 9, der Anschlussabschnitt 10, der Verbindungsabschnitt 11 sowie der freie Endabschnitt 12 erstrecken sich in einer gemeinsamen Ebene. Insbesondere liegen die Kröpfungen 8, 9, der Anschlussabschnitt 10, der Verbindungsabschnitt 11 sowie der freie Endabschnitt 12 ebenso wie der Stegabschnitt 6 und der Hakenabschnitt 7 des Ösenendes 4 in einer Mittelebene 14 der Gerüstfeder 1.

Ein durch die erste Kröpfung 8 zwischen dem Anschlussabschnitt 10 und dem Verbindungsabschnitt 11 des Klammerendes 5 gebildeter erster Kröpfungswinkel 19 beträgt im vorliegenden Ausführungsbeispiel der Erfindung 82°. Der erste Kröpfungswinkel 19 ist mit den beim Drahtbiegen und bei der Herstellung von Federn üblichen Fertigungstoleranzen behaftet. Die zweite Kröpfung 9 definiert zwischen dem Verbindungsabschnitt 11 und dem freien Endabschnitt 12 des Klammerendes 5 einen zweiten Kröpfungswinkel 20 von 52°. Auch dieser zweite Kröpfungswinkel 20 weist die üblichen Fertigungstoleranzen auf. Ein erstes Kröpfmaß 21, welches von einer durch den Federkörper 2 bestimmten Außenmantelfläche der Gerüstfeder 1 bis zum Scheitelpunkt der ersten Kröpfung 8 bestimmt ist, liegt im Bereich des 0,4 bis 0,5-fachen Nenndurchmessers 13 der Gerüstfeder 1. Ein zweites Kröpfmaß 22, welches zwischen der Außenmantelfläche der Gerüstfeder 1 und dem Scheitel der zweiten Kröpfung 9 bestimmt ist, liegt im Bereich des 0,7 bis 0,9-fachen Nenndurchmessers 13. Der Anschlussabschnitt 10 des Klammerendes 5 ist im vorliegenden Ausführungsbeispiel der Erfindung unter einem Anstellwinkel von 45° ± 15° zur Längsrichtung orientiert.

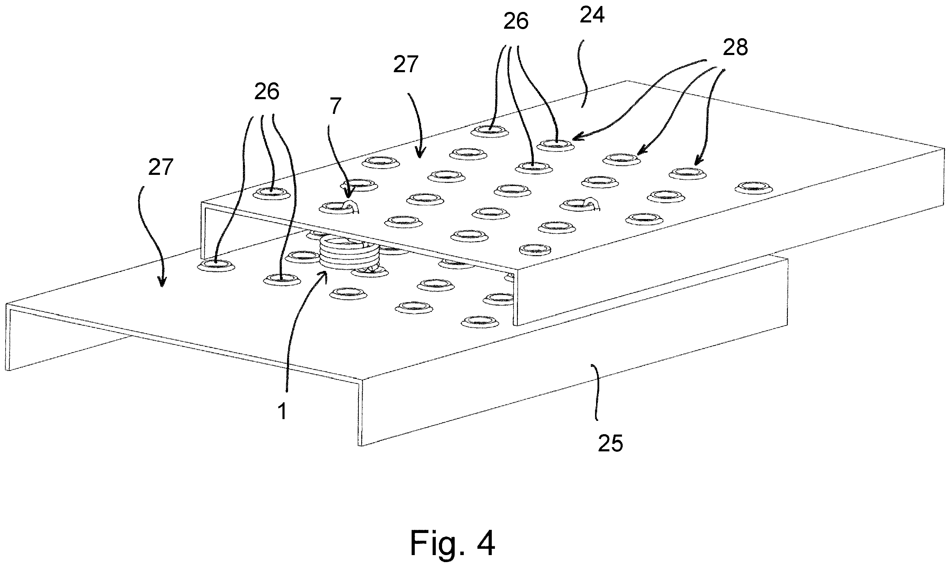

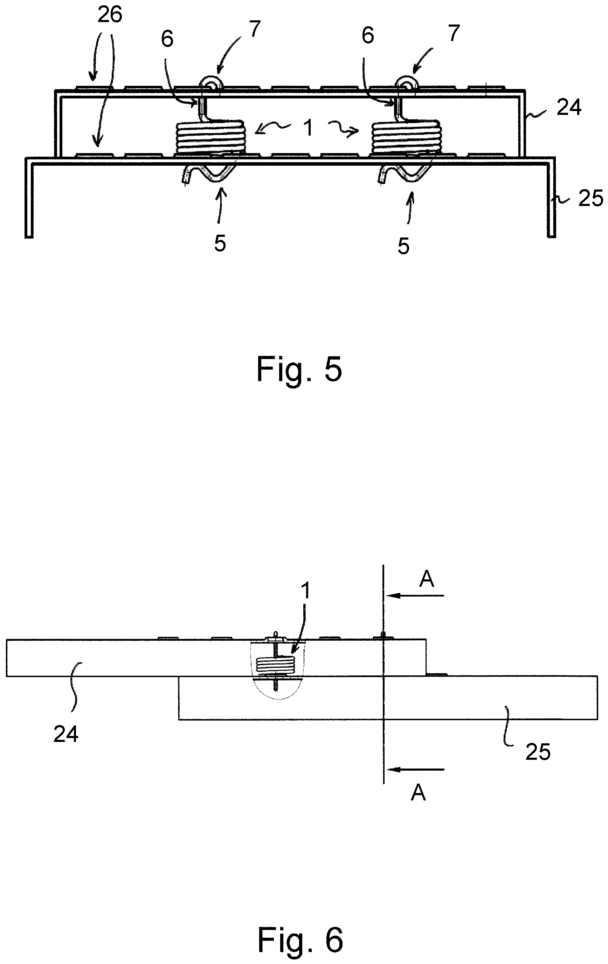

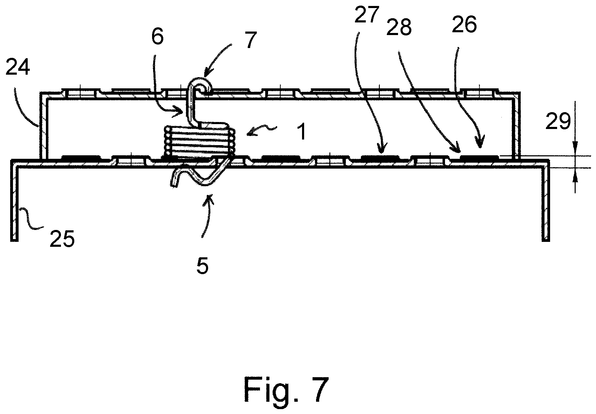

Die Fig. 4 bis 7 zeigen eine Einbausituation, in der die erfindungsgemäße Gerüstfeder 1 verwendet wird, um zwei Belagbohlen 24, 25 einer Gerüstanordnung miteinander zu verbinden.

Die Belagbohlen 24, 25 sind vorliegend langgestreckt und nur auszugsweise dargestellt. Sie weisen einen U-förmigen Querschnitt auf. Im Bereich einer Aufstandsfläche 27 ist eine Vielzahl von exemplarisch regelmäßig angeordneten, im Querschnitt kreisförmigen Durchgangsausnehmungen 26 vorgesehen. In einem Randbereich der Durchgangsausnehmungen 26 sind diese in Richtung der Aufstandsfläche 27 ausgebördelt. Die Bördelung 28 dient hier beispielsweise einer Verbesserung der Standsicherheit bei der Benutzung des Gerüsts.

Bei der Herstellung der Gerüstanordnung werden die Belagbohlen 24, 25 so übereinander gelegt, dass in einem durch den U-förmigen Querschnitt definierten Freiraum einer oberen Belagbohle 24 die erfindungsgemäße Gerüstfeder 1 angeordnet ist. Die Gerüstfeder 1 wird dabei mit dem Klammerende 5 voran in eine Durchgangsausnehmung 26 einer unteren Belagbohle 25 eingesetzt. In der montierten Stellung hintergreift das Klammerende 5 der erfindungsgemäßen Gerüstanordnung insofern die untere Belagbohle 25.

Die obere Belagbohle 24 wird dann so positioniert, dass das Ösenende 4 der Gerüstfeder 1 mit dem nicht dargestellten hakenförmigen Montagewerkzeug gegriffen und der Hakenabschnitt 7 des Ösenendes 4 durch eine korrespondierend angeordnete Durchgangsausnehmung 26 der oberen Belagbohle 24 hindurch geführt werden kann. Mit dem Stützabschnitt 31 ist die Gerüstfeder 1 dann auf der Aufstandsfläche 27 der oberen Belagbohle 24 abgelegt. In der montierten Stellung ist die Gerüstfeder 1 zugbelastet.

Eine Anpassung der Gerüstfeder 1 an die jeweilige Montagesituation und insbesondere an verschiedenartige Belagbohlen 24, 25 unterschiedlicher Art oder Hersteller erfolgt zum einen über die Geometrie des Federkörpers 2. Hier kann insbesondere über die Anzahl der Windungen 3, den Nenndurchmesser 13 sowie den Drahtdurchmesser 23 die Zugkraft eingestellt werden. Darüber hinaus findet eine Anpassung statt über eine Länge 16 des Stegabschnitts 6 des Ösenendes 4. Die Gerüstfeder 1 wird insofern bedarfsgerecht unter Berücksichtigung der Geometrie der Belagbohlen 24, 25 ausgelegt. Der Hakenabschnitt 7 des Ösenendes 4 ist dabei so hakenförmig umgeformt, dass er in der montierten Stellung die Bördelung 28 der zugeordneten Durchgangsausnehmung 26 sicher umgreift. Eine Kragweite 17 des Hakenabschnitts 7 ist so gewählt, dass der Hakenabschnitt 7 durch die Durchgangsausnehmung 26 geführt werden kann. Im vorliegenden Ausführungsbeispiel der Erfindung entspricht die Kragweite 17 etwa dem drei bis vierfachen Drahtdurchmesser 23.

Die spezifische Geometrie des Klammerendes 5 ist ebenfalls an die Geometrie der unteren Belagbohle 25 angepasst. Insbesondere ist der Anstellwinkel des Anschlussabschnitts 10 so gewählt, dass er zur Bördelung 28 der Durchgangsausnehmung 26 der unteren Belagbohle 25 korrespondiert. Die Kröpfungen 8, 9 sowie der Verbindungsabschnitt 11 sind so dimensioniert, dass die Bördelung 28 im montierten Zustand sicher hintergriffen wird. Der Nenndurchmesser 13 des Federkörpers 2 ist so bestimmt, dass der Federkörper 2 stirnseitig an der Bördelung 28 benachbarter Durchgangsausnehmungen 26 anliegt. Ein zwischen dem Federkörper 2 und der zweiten Kröpfung 9 des Klammerendes 5 gebildetes Freimaß 18 ist insofern korrespondierend gewählt zu einer effektiven Dicke 29 der unteren Belagbohle 25 im Bereich der Durchgangsausnehmung 26.

Gleiche Bauteile und Bauteilfunktionen sind durch gleiche Bezugszeichen gekennzeichnet.

### Bezugszeichenliste

- 1: Gerüstfeder
- 2: Federkörper
- 3: Windungen
- 4: Ösenende
- 5: Klammerende
- 6: Stegabschnitt
- 7: Hakenabschnitt
- 8: erste Kröpfung
- 9: zweite Kröpfung
- 10: Anschlussabschnitt
- 11: Verbindungsabschnitt
- 12: freier Endabschnitt
- 13: Nenndurchmesser
- 14: Mittelebene
- 15: Nennmaß des Federkörpers
- 16: Länge des Stegabschnitts
- 17: Kragweite des Hakenabschnitts
- 18: Freimaß
- 19: Kröpfungswinkel
- 20: Kröpfungswinkel
- 21: Kröpfmaß
- 22: Kröpfmaß
- 23: Drahtdurchmesser
- 24: Belagbohle
- 25: Belagbohle
- 26: Durchgangsausnehmung
- 27: Aufstandsfläche
- 28: Bördelung
- 29: Dicke
- 30: Anschlussabschnitt
- 31: Stützabschnitt

## Patentansprüche

1. Aus einem Metalldraht geformte Gerüstfeder (1) umfassend einen Federkörper (2), wobei der Federkörper (2) eine Mehrzahl von Windungen (3) aufweist, umfassend ein dem Federkörper (2) an einer ersten Stirnseite zugeordnetes Ösenende (4), wobei der Metalldraht dort einen in eine Längsrichtung erstreckten Stegabschnitt (6) und einen sich an den Stegabschnitt (6) anschließenden Hakenabschnitt (7) formt, und umfassend ein Klammerende (5), wobei das Klammerende (5) sich an einer dem Ösenende (4) gegenüberliegenden zweiten Stirnseite des Federkörpers (2) an ebendiesen anschließt und wobei der Metalldraht dort wenigstens eine erste Kröpfung (8) aufweist zur Formung einer Klammer.

2. Gerüstfeder (1) nach Anspruch 1, **dadurch gekennzeichnet, dass** der Metalldraht im Bereich des Klammerendes (5) doppelt gekröpft ist und die erste Kröpfung (8) sowie eine zweite Kröpfung (9) vorsieht.

3. Gerüstfeder (1) nach Anspruch 1 oder 2, **dadurch gekennzeichnet, dass** die erste Kröpfung (8) und die zweite Kröpfung (9) sich in einer gemeinsamen Ebene erstrecken und/oder gegenläufig orientiert sind.

4. Gerüstfeder (1) nach einem der Ansprüche 1 bis 3, **dadurch gekennzeichnet, dass** die erste Kröpfung (8) und die zweite Kröpfung (9) sich in einer Mittelebene (14) der Gerüstfeder erstrecken.

5. Gerüstfeder (1) nach einem der Ansprüche 1 bis 4, **dadurch gekennzeichnet, dass** der Metalldraht zur Formung des Klammerendes (5)
- zwischen dem Federkörper (2) und der ersten Kröpfung (8) einen schräg zu der Längsrichtung orientierter Anschlussabschnitt (10) und/oder
- einen die ersten Kröpfung (8) und die zweite Kröpfung (9) verbindenden Verbindungsabschnitt (11) und/oder
- einen sich an die zweite Kröpfung anschließenden freien Endabschnitt (12) bildet.

6. Gerüstfeder (1) nach einem der Ansprüche 1 bis 5, **dadurch gekennzeichnet, dass** zwischen dem Anschlussabschnitt (10) und dem Verbindungsanschnitt (11) ein erster Kröpfungswinkel (19) im Bereich von 50° bis 110° und bevorzugt im Bereich von 70° bis 90° und besonders bevorzugt von 82° ± 5° gebildet ist und/oder dass zwischen dem Verbindungsanschnitt (11) und dem freien Endabschnitt (12) ein zweiter Kröpfungswinkel (20) im Bereich von 35° bis 70° und bevorzugt im Bereich von 45° bis 60° und besonders bevorzugt von 52° ± 3° gebildet ist

7. Gerüstfeder (1) nach einem der Ansprüche 1 bis 6, **dadurch gekennzeichnet, dass** eine Kragweite (17) des Hakenabschnitts (7) einem 2,5 bis 4,5-fachen Drahtdurchmesser (23) des Metalldrahts entspricht.

8. Gerüstfeder (1) nach einem der Ansprüche 1 bis 7, **dadurch gekennzeichnet, dass** eine in die Längsrichtung bestimmte Länge eines sich an den Hakenabschnitt (7) anschließenden Stützabschnitts (31) des Ösenendes (4) kleiner ist als der zweifache Drahtdurchmesser (23).

9. Gerüstanordnung umfassend wenigstens zwei Belagbohlen (24, 25), wobei die Belagbohlen (24, 25) jeweils eine Aufstandsfläche und jeweils wenigstens eine der Aufstandsfläche (27) zugeordnete Durchgangsausnehmung (26) aufweisen und wobei die Belagbohlen (24, 25) jedenfalls abschnittsweise übereinander gelegt sind, und umfassend eine erfindungsgemäße Gerüstfeder (1) nach einem der Ansprüche 1 bis 8, wobei die Gerüstfeder (1) derart zwischen den Belagbohlen (24, 25) angeordnet und den Durchgangsausnehmungen (26) der Belagbohlen derart zugeordnet ist, dass das Ösenende (4) der Gerüstfeder (1) durch eine Durchgangsausnehmung (26) einer oberen Belagbohle (24) hindurchragt und mit dem Hakenabschnitt (7) die Durchgangsausnehmung (26) randseitig hintergreift und dass das Klammerende (5) durch eine Durchgangsausnehmung (26) einer unteren Belagbohle (25) hindurchragt und diese Durchgangsausnehmung (26) randseitig hintergreift.

10. Verwendung einer Gerüstfeder (1) nach einem der Ansprüche 1 bis 8 zum Verbinden von Belagbohlen (24, 25) einer Gerüstanordnung.
